# EUROPÄISCHE PATENTSCHRIFT

(11) **EP 0 610 750 B1**
(45) Veröffentlichungstag und Bekanntmachung des Hinweises auf die Patenterteilung: **14.04.1999**
(21) Anmeldenummer: 94101271.8
(22) Anmeldetag: 28.01.1994
(51) Int. Cl.: C09D 5/02, B05D 1/34

(54) **Mehrschichtlackierung polarer Folien-Substrate durch einmaligen Materialauftrag**
Multi-layer coating of polar film-substrates by single application
Laquage multicouche de films polaires par application unique

(30) Priorität: 10.02.1993 DE 4303833
(43) Veröffentlichungstag der Anmeldung: 17.08.1994
(73) Patentinhaber: WOLFF WALSRODE AKTIENGESELLSCHAFT, D-29699 Walsrode (DE)
(72) Erfinder: Weber, Gunter, Dr., D-29683 Fallingbostel (DE); Reiners, Ulrich, Dr., D-29643 Neuenkirchen (DE); Meyer-Stork, Sebastian, Dr., D-33659 Bielefeld (DE)
(74) Vertreter: Braun, Rolf, Dr.

(56) Entgegenhaltungen:
- EP-A- 0 381 454
- WO-A-94/04616

## Beschreibung

Die Erfindung betrifft die Lackierung polarer Folien-Substrate mit einem aus mehreren Komponenten bestehenden Beschichtungssystem, wobei der einmalige Materialauftrag zu einer Mehrschichtstruktur der Lackauflage führt,

Vor allem aus dem Bereich der Automobil-Lackierung sind Beschichtungssysteme für Metalle bekannt, deren unverträgliche Komponenten sich beim einmaligen Lackauftrag so entmischen, daß eine Mehrschichtstruktur der Auflage entsteht. Beschrieben werden geeignete Systeme z.B. in GB 1 570 540 und GB 2 046 765A als Pulverlacke sowie in GB 2 192 399A auf Lösungsmittelbasis. Die eindeutige Positionierung jeder Komponente im Schichtaufbau hängt von dem Verhältnis der spezifischen Oberflächenenergie ab: während der Bestandteil mit dem niedrigsten Wert die oberste Schicht bildet, orientiert sich die Komponente mit dem relativ höchsten Wert zum - hier polar angenommenen - Untergrund.

Meßtechnisch läßt sich die spezifische Oberflächenenergie leicht als Oberflächenspannung a erfassen (Römpp Chemie Lexikon, Bd. 4, G. Thieme Verlag, Stuttgart (1991), S. 3075-3076).

Das Auffinden von Materialkombinationen mit geeigneter Oberflächenspannungs-Abstufung wird im Falle der Metallbeschichtung dadurch erleichtert, daß diese Substrate extrem hohe spezifische Oberflächenenergien aufweisen. So liegen gemäß Handbook of Chemistry and Physics, 56. Ed., CRC Press, Cleveland (1975), S. F 23-46, die Werte für Aluminium bei 870 und für Eisen bei 1700 mN/m.

Für nichtmetallisch polare Substrate, insbesondere Kunststoffe, bestehen diesbezüglich wesentlich ungünstigere Verhältnisse, da die Oberflächenspannungen allgemein um den Faktor 10-15 geringer sind.

Ein wichtiger Anwendungsbereich für Kunststoff-Lackierungen bezieht sich auf Folien, die mit Hilfe nachträglicher Beschichtungen in ihren Eigenschaften gezielt modifiziert werden. In diesem Zusammenhang besitzt sowohl für Verpackungsanwendungen als auch für technische Einsatzzwecke die Erhöhung der Sperrwirkung gegenüber Wasserdampf eine besondere Bedeutung.

Für solche wasserdampfdichten Beschichtungen werden bislang häufig Systeme eingesetzt, die organochlor- oder -fluorhaltige Polymere beinhalten, wie z.B. Polyvinylidenchlorid (PVDC) oder Polyvinylidenfluorid (PVDF). Aus ökologischen Gründen besteht aber der Bedarf, zu diesem Zweck organohalogenfreie Auflagen zu verwenden.

Der Literatur kann entnommen werden, daß als wasserdampfdichte, halogenfreie Beschichtungspolymere eigentlich nur Polyolefine, insbesondere Polyethylen- und Polypropylen-Wachse, zur Verfügung stehen (vgl. J.M. Mohr, D.R. Paul, J. Appl. Polym. Sci. 42 (1991), 1711-1720). Um eine wirksame Barriere gegenüber Wasserdampf zu bilden, müssen diese Polyolefine bekanntlich möglichst kristallin sein, was sich aber für die Lackierung flexibler Substrate insofern als unvorteilhaft erweist, da die hohe Kristallinität zu spröden Auflagen führt, die dann entsprechend knickbruchempfindlich ist.

Neben dem Organohalogen-Aspekt zielen ökologische Bedenken auch darauf ab, daß die meisten Folien-Lacke bislang auf organischen Lösungsmitteln basieren. Die mit der Verarbeitung verbundenen Emissionen unterliegen mittlerweile erheblichen Gesetzesauflagen, so daß in zunehmendem Maße der Einsatz rein wäßriger Beschichtungssysteme angestrebt wird (vgl. Ullmann's Encyclopedia of Industrial Chemistry, Vo. A 18, S. 368, Verlag Chemie, Weinheim (1991)).

Es ist daher die Aufgabe der vorliegenden Erfindung, organohalogenfreie, wäßrige Lackiersysteme für polare Folien zur Verfügung zu stellen, die zu wasserdampfdichten, flexiblen Auflagen führen.

Die erfindungsgemäße Lösung der Aufgabe gelingt insbesondere dadurch, daß als Beschichtungs-Systeme wäßrige Lösungen, Emulsionen oder Dispersionen eingesetzt werden, die eine Wachskomponente und ein copolymeres Bindemittel enthalten. Bei der Verfilmung des Lackes entsteht aufgrund der entsprechend abgestuften Oberflächenspannungen eine Mehrschichtstruktur mit dem Wachs als Wasserdampf-Sperrschicht an der freien Oberfläche und dem Copolymer auf dem polaren Folien-Untergrund. Auf diese Weise wird eine ausgezeichnete Wasserdampf-Dichtigkeit mit einer vergleichsweise dünnen, fest verankerten Wachsauflage realisiert, so daß ein insgesamt flexibler Verbund entsteht.

Gegenstand der Erfindung ist daher eine durch einmaligen Auftrag aufgebrachte, aus mehreren Komponenten bestehende wäßrige und organohalogenfreie Beschichtung für polare Folien, die zur Ausbildung einer Mehrschichtstruktur führt, dadurch gekennzeichnet, daß die Differenz der Oberflächenspannungen (gemäß DIN 53914) zwischen dem zu beschichtenden, gegebenenfalls vorbehandelten Substrat und der Beschichtung in ihrer aufzutragenden Form mindestens 10 mN/m, bevorzugt mindestens 20 mN/m beträgt und daß sie aus einer Wachskomponente und einem copolymeren Bindemittel, das aus mindestens zwei der folgenden Monomere aufgebaut ist: Acrylate, Methacrylate, Vinylacetat, Vinylalkohol, Ethylen, Propylen, Butadien, Styrol, Acrylsäure, Methacrylsäure, Acrylamid und Acrylnitril besteht, wobei die Differenz der Oberflächenspannungen der beiden Bestandteile in ihrer aufzutragenden Form mindestens 5 mN/m bevorzugt mindestens 10 mN/m beträgt, wobei die Beschichtung keine anorganischen Teilchen enthält.

Die erfindungsgemäße Lösung der Aufgabe ist überraschend, weil sich die Verhältnisse der freien Oberflächenenergien in den beanspruchten Systemen wesentlich ungünstiger darstellen als im Falle der eingangs zitierten Beschichtungen von Metallen. Zum einen weisen die erfindungsgemäß geeigneten, polaren Folien mit <70 mN/m eine im Vergleich zu Metallen viel niedrigere Oberflächenspannung auf, zum anderen benötigen insbesondere die wäßrigen Beschichtungs-Systeme Stabilisatoren, deren Funktion in der Reduzierung der Grenzflächenspannungen besteht, was einer gezielten Separation der verfilmenden Komponenten an sich entgegenwirkt.

Als zu beschichtende Folien sind erfindungsgemäß solche Typen geeignet, die an sich oder aufgrund einer entsprechenden Vorbehandlung eine Oberflächenspannung von >45 mN/m, bevorzugt >60 mN/m aufweisen. Ohne die Erfindung einzuschränken, seien folgende Materialien exemplarisch genannt:

Beschichtbar sind Folien auf der Basis von Biopolymeren wie Cellulosehydrat-Folien (Zellglas), durch Blendpartner modifizierte Zellglas-Folien (vgl, z.B. DE-OS 4 009 758) sowie Folien, die aus destrukturierter Stärke und deren Blends mit anderen Thermoplasten hergestellt werden, sofern durch den Anteil an unpolaren Polymeren nicht eine zu geringe Oberflächenspannung auftritt (vgl. z.B. EP 0 409 781, EP 0 409 782, EP 0 409 783, EP 0 409 788) u.a.

Geeignet sind desweiteren Folien auf der Basis synthetischer Polymere wie copolymere Polypropylene, homo -oder copolymere Polyamide, Polyester und Polyurethane u.a., auch in gereckter Form, deren Oberflächenspannung gegebenenfalls mit Hilfe oxidativer Vorbehandlungen wie z.B. Niederdruck-Glimmentladung, Coronaentladung, Plasma-Behandlung, Beflammen oder Beizen z.B. mit Chromschwefelsäure ausreichend hoch einzustellen ist (vgl. Ullmanns Encyclopädie der technischen Chemie, Bd. 15, S. 343, Verlag Chemie, Weinheim (1978)).

Die genannten Folien und Verfahren zu ihrer Herstellung sind bekannt und beispielsweise im Kunststoffhandbuch, 2. Aufl., Hanser Verlag, München, Wien (1985) ausführlich beschrieben.

Um eine bessere Haftung des Lackes auf den Folien zu erreichen können diese bekanntermaßen neben den genannten Vorbehandlungen vor der Beschichtung oberflächlich mit sogenannten Primern ausgestattet werden. Geeignete Systeme wie Polyalkylenimine, Polyaminopolyurethane und -polyole, Polyester-Harze, Ethylen/Acrylsäure- und Propylen/Maleinsäureanhydrid-Copolymere und funktionalisierte Silane (vgl. R. Gächter, H. Müller, Taschenbuch der Kunststoff-Additive, Hanser-Verlag, München, Wien (1989)), sowie entsprechende Auftragsverfahren sind bekannt.

Die zur Applikation der Beschichtung erfindungsgemäß geeigneten wäßrigen Lösungen, Emulsionen oder Dispersionen enthalten Wachse natürlichen und synthetischen Ursprungs sowie deren Mischungen untereinander. Zu den natürlichen Wachsen zählen dabei z.B. Candelilla-, Carnauba-, Montan- und Paraffin-Wachse, zu den synthetischen u.a. Paraffin- und Polyethylen-Wachse. Solche Verbindungen sind bekannt und z.B. in Ullmanns Encyclopädie der technischen Chemie, Bd. 24, S. 1-49, Verlag Chemie, Weinheim (1983), ausführlich beschrieben. Bevorzugt werden Carnauba-Wachse verwendet.

Einschränkungen hinsichtlich des Schmelzbereiches der erfindungsgemäß einzusetzenden Wachse ergeben sich dadurch, daß einerseits eine genügende Hitze-Resistenz der Beschichtung gewährleistet sein muß und andererseits noch eine vollständige Verfilmung beim Beschichten möglich ist. Bevorzugt wird deshalb ein Schmelzbereich zwischen 50 und 120°C, und besonders zwischen 60 und 90°C. In diesem Rahmen erweisen sich auch Mischungen höher und niedriger schmelzender Wachse als effektiv. Hinsichtlich der Teilchengröße der dispergierten oder emulgierten Wachse sind Partikeldurchmesser unter 1,0 µm und insbesondere unter 0,1 µm zu bevorzugen.

Wie bereits erwähnt erfolgt die Applikation der Beschichtung aus wäßriger Lösung, Emulsion oder Dispersion. In diesem Zusammenhang kann die Emulgier- bzw. Dispergierbarkeit der erfindungsgemäß geeigneten Wachse durch den an sich bekannten Einbau polarer Gruppen verbessert werden (vgl. z.B.: G.A. Russel, J. Am. Chem. Soc., 79 (1957) 3871; M. Irving et al., Polym. Degrad. Stab., 5 (1983) 467; N.G. Gaylord, J. Polym. Sci. Polym. Lett. Ed., 21 (1983) 23-30; A. Neyishi et al., J. Appl. Polym. Sci., 22 (1978) 2953 und A. Hoff, J. Appl. Polym. Sci., 29 (1984) 465). Die Verfahren dazu sind ebenfalls beschrieben (z.B. in: G.M. Gale, Appl. Organomet. Chem., 2 (1988) 17-31).

Die zur Applikation der erfindungsgemäßen Beschichtungen eingesetzten Lösungen, Emulsionen oder Dispersionen enthalten außerdem copolymere Bindemittel, die aus mindestens zwei der folgenden Monomere aufgebaut sind: Acrylate, Methacrylate, Vinylacetat, Vinylalkohol, Ethylen, Propylen, Butadien, Styrol, Acrylsäure, Methacrylsäure, Acrylamid und Acrylnitril. Bevorzugt werden Styrol-Butadien-Acrylnitril- oder Styrol-Butadien-Acrylat-Systeme eingesetzt.

Erfindungsgemäß geeignete Lösungen, Emulsionen oder Dispersionen können auch Mischungen solcher Copolymerisate enthalten.

Die genannten Copolymerisate und Verfahren zu ihrer Herstellung sind bekannt und ausführlich beschrieben (vgl. z.B.: R.W. Lenz, Organic Chemistry of Synthetic High Polymers, Interscience Publishers, New York (1976) oder Encyclopedia of Polymer Science and Engineering, Wiley-Interscience, New York (1985), S. 211-299).

Die Molmassen-Grenzen der erfindungsgemäß geeigneten Copolymerisate ergeben sich u,a, dadurch, daß bei zu geringem Molekulargewicht die Hitze-Resistenz der Beschichtung nicht erreicht wird und daß bei zu hohem Molekulargewicht Verfilmungsschwierigkeiten beim Beschichten auftreten.

Die Variationsbreite hinsichtlich der Zusammensetzung der erfindungsgemäß geeigneten Copolymerisate wird u.a. dadurch begrenzt, daß die Beschichtung einerseits nicht zu weich sein darf, weil die Folie sonst bei der Lagerung als Rolle verklebt ("verblockt") und andererseits nicht zu spröde, da die Dichtigkeit der Beschichtung sonst infolge mechanischer Belastungen der Hülle nachlassen kann. Diese Abstufung wird im Falle der oben als bevorzugt bezeichneten Copolymer-Systeme durch das Verhältnis zwischen Butadien-Anteil (Weich-Komponente) und Styrol-Anteil (Hart-Komponente) gesteuert.

Bei der Verwendung von Copolymeren auf der Basis partiell verseiften Polyvinylacetats wird ein Hydrolysegrad von >90 % sowie ein Molekulargewicht >50.000 und bei Acrylat-haltigen Copolymeren eine Masse >150.000 bevorzugt.

Die erfindungsgemäß einzusetzenden Copolymerisate können zusätzlich polare Gruppen wie Carboxyl- oder Hydroxylreste enthalten, die ihre Emulgier- bzw. Dispergierbarkeit in wäßrigen Systemen verbessern und Möglichkeiten zu Vernetzungen bieten. Als Vernetzer stehen u.a. Aziridine, Dialdehyde, Harnstoff- und Melamin-Formaldehyd-Harze, Polyamid-Epichlorhydrin-Harze, Alkalimetall-Hydroxide, Zink- und Zirkonium-Salze und Polycarbonsäuren zur Verfügung. Solche Systeme und Reaktionen sind bekannt und z.B. in P. Moles, Polym. Paint Colour J., 181 (1991) 266-267, 282 und D. Lämmermann, Melliand Textilber., 73 (1992), 274-279 beschrieben.

Auch selbstvernetzende Systeme, die beispielsweise durch den bekannten Einbau von N-Hydroxymethyl-Resten oder wärmehärtbaren Gruppen (vgl, z.B.: K. Pleßke, Kunststoffe, 59 (1969), 247-251) realisiert werden, sind geeignet.

Die erfindungsgemäßen wäßrigen Beschichtungssysteme auf der Basis der beschriebenen Wachse und Copolymerisate können zusätzlich übliche Hilfsstoffe zur Verbesserung der Dispergier- bzw. Emulgierbarkeit der Copolymere enthalten und Stabilisatoren, die einer nachträglichen Koagulation der Polymerteilchen entgegenwirken. Bei den Hilfsstoffen handelt es sich im allgemeinen um anionische, neutrale oder kationische, niedermolekulare, oligomere oder polymere Emulgatoren, Tenside oder Schutzkolloide der an sich bekannten Art (vgl. z.B. Ullmanns Encyclopädie der technischen Chemie, Bd. 2, S. 273-281, Verlag Chemie, Weinheim (1972) oder ebenda Bd, 10, S. 449-473 (1975)). Außerdem können die erfindungsgemäßen Lösungen, Emulsionen oder Dispersionen bekannte Zusatzmittel wie Katalysatoren, Pigmente, Lösungsmittel, Verlaufshilfsmittel, Füllstoffe, Gleitmittel und Abstandshalter umfassen (vgl. u.a. D.R. Karsa, Special Publication No. 76, Royal Society of Chemistry, (1990)). Anorganische Teilchen sind jedoch nicht umfaßt.

Die Überführung der erfindungsgemäß zu verwendenden Copolymere und Wachse bzw. deren Mischungen in eine wäßrige Lösung, Emulsion oder Dispersion wird nach bekannten Verfahren entweder durch Lösen in einem mit Wasser mischbaren Lösungsmittel wie Aceton oder Tetrahydrofuran und anschließendem Zusatz von Wasser und Entfernung des Lösungsmittels oder durch Anwendung hoher Scherkräfte, z.B. mit einem Ultra-Turrax-Rührer unter Verwendung von Düsen oder Dissolverscheiben, vollzogen.

Die zur Applikation der erfindungsgemäßen Beschichtungen eingesetzten Lösungen, Emulsionen oder Dispersionen enthalten 10-60 %, bevorzugt 20-35 % des copolymeren Bindemittels (bezogen auf den Feststoff-Anteil) und 3 bis 50 %, bevorzugt 5 bis 20 % der Wachs-Komponente (bezogen auf das Copolymer). Der Konzentrationsbereich wird in der Praxis vor allem durch die Viskosität begrenzt, die zwischen 50 und 60 mPas·sec liegen sollte, um einen optimalen Lackauftrag zu gewährleisten.

Wie eingangs erläutert ist bei einer Mehrschichtlackierung durch einmaligen Materialauftrag entscheidend, daß die Einzelkomponenten des Beschichtungssystems bezüglich ihrer Oberflächenspannungen in geeigneter Weise abgestuft sind, um einen eindeutigen Lackaufbau zu erzielen. Für die erfindungsgemäße Beschichtung müssen das copolymere Bindemittel und die Wachskomponente eine Oberflächenspannungsdifferenz von mindestens 5 mN/m, bevorzugt mindestens 10 mN/m aufweisen; die Differenz zwischen der Beschichtungsdispersion und dem Untergrund sollte mindestens 10 mN/m, bevorzugt mindestens 20 mN/m betragen. Die Messung der Oberflächenspannungs-Werte erfolgt gemäß DIN 53 914.

Die erfindungsgemäßen Beschichtungen können ein- oder beidseitig aufgetragen werden, wobei als Applikationsformen Spritzen, Walzen, Rakeln, Gießen, Streichen, Tauchen und Drucken möglich sind. Bevorzugt erfolgt der Auftrag durch Tauchen und anschließender Abstreifung mit Hilfe von Dosierwalzen.

Nach dem Trocknen durch Hitzeeinwirkung weist die Beschichtung ein Flächengewicht von 5 bis 50 g/m², bevorzugt 7 bis 15 g/m² auf.

Wie den unten angegebenen Beispielen zu entnehmen ist kommt es bezüglich der Barriere-Eigenschaften der erfindungsgemäßen Beschichtung zu synergistischen Effekten zwischen Wachs und copolymeren Bindemittel. Die durch die Kombination der beiden Komponenten zu erzielende Sperrwirkung ist wesentlich besser als es aufgrund einer Addition des Barriere-Effekts der Einzelkomponenten zu erwarten wäre.

Die Wachs-Komponente übernimmt neben der in Kombination mit dem Bindemittel zu erzielenden Barriereeigenschaft zusätzlich Funktionen als Abstandshalter und Gleitmittel. Außerdem ist aus den Beispielen ersichtlich, daß durch Verwendung bestimmter Paraffin-haltiger Wachse bei einigen Folien ab 120°C gute Siegeleigenschaften erreicht werden.

Die erfindungsgemäß beschichteten Substrate eignen sich zur Herstellung wasserdampfdichter Verpackungen (wie z.B. Lebensmittelverpackungen) oder von Hygienefolien.

Die vorliegende Erfindung soll anhand der nachfolgenden Ausführungsbeispiele näher erläutert werden.

### Beispiele

In den folgenden Beispielen sind die prozentualen Konzentrationen - sofern nichts anderes vermerkt ist - w/w-Angaben und die Permeationswerte für Wasserdampf gemäß DIN 53 122, 23°C, 85 % r.F. ermittelt. Die Messung der Oberflächenspannung σ erfolgt gemäß DIN 53 914, die Prüfung der Siegelfestigkeit nach Brugger bei 5 bar und 0,5 sec.

### Beispiel 1

Als zu beschichtende Folie wird Zellglas (Transparit® 325 P; Fa, Wolff Walsrode AG, D-3030 Walsrode; 22 µm, δ > 70 mN/m) verwendet. Die Lackierung geschieht einseitig nach Fixierung auf einer Glasplatte mit Hilfe einer Rakel. Es wird eine wäßrige Dispersion aufgetragen, die 30 % eines Copolymers aus Styrol, Butadien und Acrylnitril (Styrofan® LD 600 S; Fa. BASF AG, D-6700 Ludwigshafen; σ = 47,6 mN/m) und 10 % (bezogen auf das Copolymer) eines Carnauba-Wachses (Ultralube® W 70 90; Fa, Surface Chemie, D-5448 Kastellaun; Fp.: 84°C; δ = 34,3 mN/m) enthält, Die Trocknung erfolgt im Umlufttrockenschrank bei 130°C bis zu einer Oberflächentemperatur von 110°C.

Es wird eine flexible, nicht klebende, gut haftende Auflage mit einem Flächengewicht von 3,6 g/m² erhalten, die eine Wasserdampfdurchlässigkeit (WDDU) von 26 g/m² · 24 h liefert.

Bei Austausch des Carnauba-Wachses gegen ein Paraffin-Wachs (Mobil EXD 80/338 M; Fa. Mobil Oil AG, D-2000 Wedel; Fp.: 75°C; σ = 35,6 mN/m) ergibt die Beschichtung eine Siegelfestigkeit von 4,6 N/15 mm bei 120°C (Lack/Lack).

Das unbeschichtete Material liefert einen WDDU-Wert von 1230 g/m²·24 h und ist nicht siegelbar.

### Beispiel 2

Als zu beschichtende Folie wird ein Stärke-Blend-Film (Mater-Bi® A/F 05 h; Fa. Novamont-Montedison, D-6236 Eschborn; 33 µm, σ = 60 mN/m) verwendet. Die Beschichtung erfolgt entsprechend Beispiel 1; getrocknet wird bei 90°C (Umluft) bis zu einer Oberflächentemperatur von 80°C.

Es wird eine flexible, nicht klebende, gut haftende Auflage mit einem Flächengewicht von 4,7 g/m² erhalten, die eine Wasserdampfdurchlässigkeit (WDDU) von 75 g/m²·24 h liefert.

Das unbeschichtete Material ergibt einen WDDU-Wert von 240 g/m²·24 h.

### Beispiel 3

Als zu beschichtende Folie wird ein Polysaccharid-Film (Soafil® PSF 330; Fa. Mitsubishi Int., D-4000 Düsseldorf; 26 µm; σ = 60 nM/m) verwendet. Die Beschichtung erfolgt entsprechend Beispiel 1; getrocknet wird bei 130°C (Umluft) bis zu einer Oberflächentemperatur von 110°C.

Es wird eine flexible, nicht klebende, gut haftende Auflage mit einem Flächengewicht von 8,9 g/m² erhalten, die eine Wasserdampfdurchlässigkeit (WDDU) von 95 g/m²·24 h liefert.

Das unbeschichtete Material ergibt einen WDDU-Wert von 1370 g/m²·24 h.

### Beispiel 4

Als zu beschichtende Folie wird ein Corona-vorbehandelter Polyurethan-Film (Walopur® 2102 AK; Fa. Wolff Walsrode AG, D-3030 Walsrode; 50 µm) verwendet. Die Beschichtung erfolgt entsprechend Beispiel 1; getrocknet wird bei 150°C (Umluft) bis zu einer Oberflächentemperatur von 130°C.

Es wird eine flexible, nicht klebende, gut haftende Auflage mit einem Flächengewicht von 3,3 g/m² erhalten, die eine Wasserdampfdurchlässigkeit (WDDU) von 15 g/m²·24 h liefert.

Das unbeschichtete Material ergibt einen WDDU-Wert von 50 g/m²·24 h.

Bei Austausch des Carnauba-Wachses gegen ein Paraffin-Wachs (Mobil EXD 80/338 M; Fa. Mobil Oil AG, D-2000 Wedel; Fp.: 75°C; σ = 35,6 mN/m) ergibt die Beschichtung eine Siegelfestigkeit von 2,8 N/15 mm (Lack/Lack) und 2,0 N/15 mm (Lack/Folie) bei 130°C.

### Beispiel 5

Als zu beschichtende Folie wird ein Corona-vorbehandelter Polyester-Film (Melinex® 813; Fa. Deutsche ICI, D-6000 Frankfurt a.M., 12 µm) verwendet. Die Beschichtung erfolgt entsprechend Beispiel 1; getrocknet wird bei 150°C (Umluft) bis zu einer Oberflächentemperatur von 130°C.

Es wird eine flexible, nicht klebende, gut haftende Auflage mit einem Flächengewicht von 3,9 g/m² erhalten, die eine Wasserdampfdurchlässigkeit (WDDU) von 12 g/m²·24 h liefert.

Das unbeschichtete Material ergibt einen WDDU-Wert von 20 g/m²·24 h.

Bei Austausch des Carnauba-Wachses gegen ein Paraffin-Wachs (Mobil EXD 80/338 M; Fa. Mobil Oil AG, D-2000 Wedel; Fp.: 75°C; σ = 35,6 mN/m) ergibt die Beschichtung eine Siegelfestigkeit von 1,9 N/15 mm bei 120°C (Lack/Lack).

### Beispiel 6

Als zu beschichtende Folie wird ein biaxial gereckter Polyamid-Film (Emblem 15; Fa. Emblem Europe, I-75010 Pisticci Scalo; 15 µm; σ = 65 mN/m) verwendet. Die Beschichtung erfolgt entsprechend Beispiel 1; getrocknet wird bei 150°C (Umluft) bis zu einer Oberflächentemperatur von 130°C.

Es wird eine flexible, nicht klebende, gut haftende Auflage mit einem Flächengewicht von 3,3 g/m² erhalten, die eine Wasserdampfdurchlässigkeit (WDDU) von 11 g/m²·24 h liefert,

Das unbeschichtete Material ergibt einen WDDU-Wert von 50 g/m²·24 h.

## Patentansprüche

1. Durch einmaligen Auftrag aufgebrachte, aus mehreren Komponenten bestehende wäßrige und organohalogenfreie Beschichtung für polare Folien, die zur Ausbildung einer Mehrschichtstruktur führt, dadurch gekennzeichnet, daß die Differenz der Oberflächenspannungen (gemäß DIN 53914) zwischen dem zu beschichtenden, gegebenenfalls vorbehandelten Substrat und der Beschichtung in ihrer aufzutragenden Form mindestens 10 mN/m, bevorzugt mindestens 20 mN/m beträgt und daß sie aus einer Wachskomponente und einem copolymeren Bindemittel, das aus mindestens zwei der folgenden Monomere aufgebaut ist: Acrylate, Methacrylate, Vinylacetat, Vinylalkohol, Ethylen, Propylen, Butadien, Styrol, Acrylsäure, Methacrylsäure, Acrylamid und Acrylnitril besteht, wobei die Differenz der Oberflächenspannungen der beiden Bestandteile in ihrer aufzutragenden Form mindestens 5 mN/m bevorzugt mindestens 10 mN/m beträgt, wobei die Beschichtung keine anorganischen Teilchen enthält.

2. Beschichtung nach Anspruch 1, dadurch gekennzeichnet, daß das Wachs zwischen 50°C und 120°C, bevorzugt zwischen 60 und 90°C schmilzt.

3. Beschichtung nach Anspruch 2, dadurch gekennzeichnet, daß das Wachs ein Paraffinwachs ist.

4. Beschichtung nach einem der Ansprüche 1 bis 3, dadurch gekennzeichnet, daß der Wachsanteil 3 bis 50 %, bevorzugt 5 bis 20 % (bezogen auf das Copolymer) beträgt.

5. Polare Folien mit einer Beschichtung gemäß einem der Ansprüche 1 bis 4.

6. Verwendung von Folien gemäß Anspruch 5 für die Herstellung wasserdampfdichter Verpackungen.

## Claims

1. Aqueous coating for polar films consisting of two or more components and containing no organohalogens applied by a single application operation, which coating gives rise to the formation of a multilayer structure, characterised in that the difference in surface tensions (to DIN 53914) between the optionally pretreated substrate to be coated and the coating in the form in which it is applied is at least 10 mN/m, preferably at least 20 mN/m and that the coating consists of a wax component and a copolymeric binder, which is synthesised from at least two of the following monomers: acrylates, methacrylates, vinyl acetate, vinyl alcohol, ethylene, propylene, butadiene, styrene, acrylic acid, methacrylic acid, acrylamide and acrylonitrile, wherein the difference in surface tensions of the two constituents in the form in which they are applied is at least 5 mN/m, preferably at least 10 mN/m, wherein the coating contains no inorganic particles.

2. Coating according to claim 1, characterised in that the wax melts at between 50°C and 120°C, preferably between 60 and 90°C.

3. Coating according to claim 2, characterised in that the wax is a paraffin wax.

4. Coating according to one of claims 1 to 3, characterised in that the wax content is 3 to 50%, preferably 5 to 20% (relative to the copolymer).

5. Polar films having a coating according to one of claims 1 to 4.

6. Use of films according to claim 5 for the production of packages impermeable to water vapour.

## Revendications

1. Composition aqueuse de revêtement à plusieurs composants sans composés organiques halogénés, pour films polaires, appliquée en une seule fois, qui mène à la formation d'une structure multicouche, caractérisée en ce que la différence des tensions superficielles (selon la norme DIN 53914) entre le substrat à revêtir, éventuellement prétraité, et la composition de revêtement sous sa forme à appliquer s'élève au moins à 10 mN/m, de préférence au moins à 20 mN/m et en ce qu'elle est constituée d'un composant à base de cire et d'un liant copolymère, qui est formée d'au moins deux des monomères suivants : acrylate, méthacrylate, acétate de vinyle, alcool vinylique, éthylène, propylène, butadiène, styrène, acide acrylique, acide méthacrylique, acrylamide et acrylonitrile, la différence des tensions superficielles des deux constituants sous leur forme à appliquer s'élevant au moins à 5 mN/m, de préférence au moins à 10 mN/m, la composition de revêtement ne contenant pas de particules inorganiques.

2. Composition de revêtement suivant la revendication 1, caractérisée en ce que la cire fond entre 50°C et 120°C, de préférence entre 60 et 90°C.

3. Composition de revêtement suivant la revendication 2, caractérisée en ce que la cire est une cire paraffinique.

4. Composition de revêtement suivant l'une des revendications 1 à 3, caractérisée en ce que la proportion de cire s'élève à une valeur de 3 à 50 %, de préférence de 5 à 20 % (par rapport au copolymère).

5. Films polaires portant une composition de revêtement suivant l'une des revendications 1 à 4.

6. Utilisation de films suivant la revendication 5 pour la production d'emballages étanches à la vapeur d'eau.
